Europäisches Patentamt

**European Patent Office**

Office européen des brevets

(19)

(11) Veröffentlichungsnummer: **0 037 070**
**B1**

(12) # EUROPÄISCHE PATENTSCHRIFT

(45) Veröffentlichungstag der Patentschrift:
02.01.85

(51) Int. Cl.³: **H 04 B 7/26**

(21) Anmeldenummer: **81102242.5**

(22) Anmeldetag: **25.03.81**

(54) **Mobiles Funknetz.**

(30) Priorität: **31.03.80 DE 3012484**

(43) Veröffentlichungstag der Anmeldung:
**07.10.81 Patentblatt 81/40**

(45) Bekanntmachung des Hinweises auf die Patenterteilung:
**02.01.85 Patentblatt 85/1**

(84) Benannte Vertragsstaaten:
**AT BE CH FR GB IT LI LU NL SE**

(56) Entgegenhaltungen:
**DE - A - 2 634 080**
**US - A - 3 663 762**

**1978 INTERNATIONAL CONFERENCE ON COMMUNICATIONS, Band 1, 4.-7. Juni 1978, Toronto NEW YORK (US), M. STERN et al.: "Dyna tac update", Seiten 4.1.1 bis 4.1.4**

(73) Patentinhaber: **Siemens Aktiengesellschaft, Berlin und München Wittelsbacherplatz 2, D-8000 München 2 (DE)**

(72) Erfinder: **Kammerlander, Karl, Wiesenstrasse 10, D-8190 Wolfratshausen (DE)**
Erfinder: **von der Neyen, Hans-Jürgen, Ing. grad., Damaschkestrasse 63, D-8000 München 82 (DE)**
Erfinder: **Pooch, Gerhard, Ing. grad., Nordendstrasse 119, D-8080 Emmering (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein mobiles Funknetz mit einer Anzahl von Funkkonzentratoren in gegenseitiger räumlicher Anordnung nach Art eines Zellularsystems mit sich überlappenden Funkbereichen, bei dem jeweils eine fest vorgegebene Anzahl von einander unmittelbar benachbarten Funkbereichen eine Funkbereichsgruppe bildet, in denen sich die insgesamt zur Verfügung stehenden Frequenzkanäle wiederholen, bei dem ferner der Frequenzverteilungsplan für die Funkkonzentratoren so festgelegt ist, daß Gleichkanalstörungen im jeweiligen Funkbereich einschließlich einer erweiterten Randzone weitgehend ausgeschlossen sind, und bei dem wenigstens die Signalisierung in digitaler Form zwischen den ortsfesten Funkkonzentratoren und den beweglichen Teilnehmerstationen über für Duplexbetrieb ausgelegte Organisationskanäle vorgenommen ist und in jedem der mit einer zentralen Steuereinheit für die Funkdatensteuerung versehenen Funkkonzentratoren ein Meßempfänger mit einer in das Synchronsystem der Funkkonzentratoren einbezogenen Steuerung vorgesehen ist, über die mittels Feldstärkemessung und Abspeichern der Feldstärkewerte eine Überwachung der Funkkanäle benachbarter Funkbereiche und Umschaltung beweglicher Teilnehmer in einen anderen Funkbereich erfolgt.

Ein mobiles Funknetz dieser Art ist durch die US-A-3 663 762 bekannt.

Ein ähnliches mobiles Funknetz ist auch durch die DE-AS-2 659 635 bekannt. Jeder Funkkonzentrator verfügt bei diesem bekannten Funknetz über einen zentralen Organisationskanal, in dem die Informationen der verschiedenen Organisationsfunktionen, wie Kennung, Anmeldung, Ummeldung, Anwesenheitsprüfung, Belegung und Ruf zeitgestaffelt übertragen werden. Die digitale Form dieser Information gibt ein Höchstmaß an Resistanz und ermöglicht darüber hinaus, ein direktes Maß für die Verbindungsqualität, bzw. den jeweiligen Geräuschabstand, über eine Messung des Phasenjitters zu erhalten. Für die Aufrechterhaltung eines ungestörten Betriebs müssen die Teilnehmerstationen bei dem bekannten System neben dem Organisationskanal des Funkkonzentrators, bei dem sie angemeldet sind, ständig auch die Organisationskanäle benachbarter Funkbereiche überwachen, und sich notfalls über einen anderen Funkkonzentrator anmelden, wenn im funkbereichsüberschreitenden Verkehr die Verbindung zum Funkkonzentrator unbrauchbar wird. Dies bedeutet einen nicht unerheblichen Aufwand an Steuer- und Umschaltmitteln bei den beweglichen Teilnehmerstationen.

Für ein mobiles Funknetz wurde in der EP-A-0 036 146 eine Lösung für die Übertragung der die Organisationsfunktionen beinhaltenden Informationen zwischen den Funkkonzentratoren und den beweglichen Teilnehmerstationen angegeben, die insbesondere auf Seiten der Teilnehmerstationen mit einem wesentlichen geringeren Aufwand an Steuer- und Umschaltmitteln auskommt.

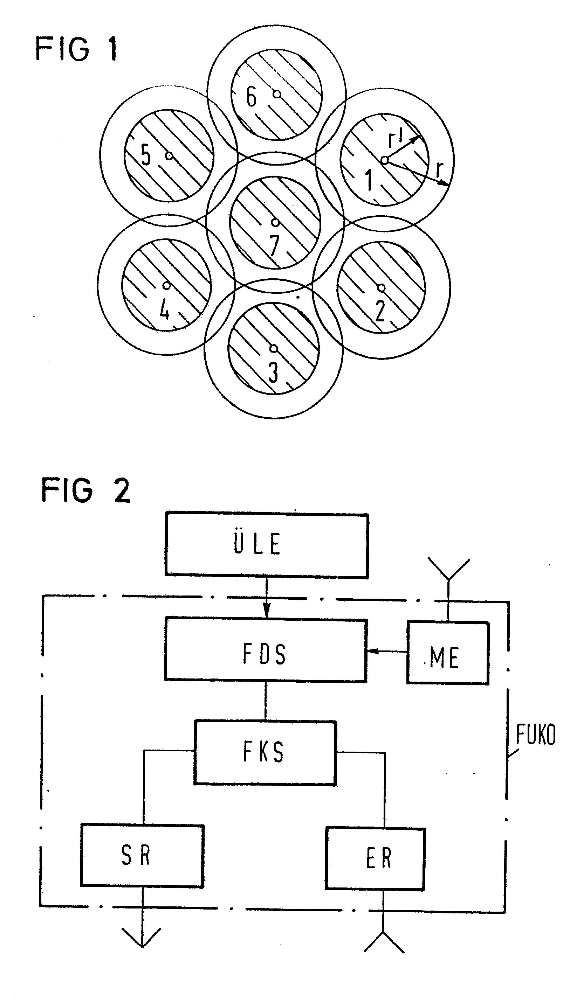

Bei diesem mobilen Funknetz ist den Funkkonzentratoren mehrerer Funkbereichsgruppen wenigstens ein Organisationskanal gemeinsam zugeordnet, der unter Einsatz einer netzweiten Synchronisation als Mehrfachzugriffkanal mit einem periodischen Rahmen gestaltet ist. Fig. 1 zeigt die schematische Darstellung einer Funkbereichsgruppe FBG, bestehend aus sieben Funkbereichen 1, 2 ... 7, die sich in den Randzonen geringfügig überlappen und in deren Zentrum jeweils ein Funkkonzentrator angeordnet ist, der die räumliche Lage des betreffenden Funkbereichs bestimmt. Mit r ist dabei der Funkbereichsradius bezeichnet, bei dem eine notwendige gegenseitige Überlappung auftritt. Der schraffiert gezeichnete Bereich mit dem inneren Funkbereichsradius r′ ist überlappungsfrei. Innerhalb der überlappungsfreien inneren Bereiche dürfen Teilnehmer nur Kanäle benutzen, die diesem Bereich zugeteilt sind, um eine Desorganisation der Frequenzplanung zu vermeiden. Beträgt der Radius der Funkbereiche z. B. 30 km, so ergeben sich aufgrund der gegenseitigen Überlappungsnotwendigkeit innere Bereiche von ca. 20 ... 25 km Radius, die überlappungsfrei sind.

Der Erfindung liegt die Aufgabe zugrunde, für ein solches mobiles Funknetz eine Lösung anzugeben, die eine sichere Übernahme einer in einem Nachbarfunkbereich bestehenden Verbindung gewährleistet, dessen Teilnehmer mit einer noch völlig ausreichenden Verbindungsqualität sich bereits im eigenen Funkbereich aufhält, aber aufgrund der zu erwartenden Gleichwellenstörung den Funkkanal des Nachbarfunkbereiches nicht benutzen darf.

Diese Aufgabe wird gemäß der Erfindung in der Weise gelöst, daß zusätzlich zur Messung der Feldstärke, für die im Meßempfänger über eine Vielzahl von Messungen der Trend ermittelt und daraus über eine zentrale Auswertung eine gegebenenfalls erforderliche Umschaltung eingeleitet wird, eine Messung der Entfernung der jeweiligen beweglichen Teilnehmerstation über die Zeitdifferenz zwischen einem eigenen Sollzeitzeichen und dem Zeitzeichen der empfangenen Kanalinformation der betreffenden Teilnehmerstation erfolgt.

Nachstehend wird die Erfindung anhand eines in der Zeichnung dargestellten Ausführungsbeispieles näher erläutert.

In Fig. 2 ist in einem Blockschaltbild ein Funkkonzentrator FUKO dargestellt. Der Funkkonzentrator weist eine Funkdatensteuerung FDS auf, die mit einer Funkkanalsteuerung FKS zusammenarbeitet. Die Funkkanalsteuerung liefert dem Sender SR im Rhythmus der aufeinanderfolgenden Rahmen des Organisationskanales den in einem zugeordneten Zeitschlitz zu übertragenden Informationsblock. Mit ER ist der Empfänger des Funkkonzentrators bezeichnet.

Die Funkdatensteuerung FDS ist ferner mit einer Überleiteinrichtung ÜLE verbunden.

Erfindungsgemäß ist im Funkkonzentrator FUKO ein Meßempfänger ME mit einer Steuerung vorgesehen, die über die Funkdatensteuerung FDS in das Synchronsystem der Funkkonzentratoren einbezogen ist. Damit stehen dieser Steuerung alle Zeitdaten der Funkorganisation zur Verfügung, wie z. B. Rahmenbeginn, Blocknummer usw.

Durch diesen Synchronismus ist der Meßempfänger einerseits in der Lage, neben dem in einem Kanal herrschenden Empfangspegel auch die Verbindungsidentifizierung zu lesen und damit die Verbindungsdaten bereits vorsorglich zu speichern. Stellt dabei die Steuerung aufgrund einer größeren Zahl von Messungen einen ansteigenden Trend der Feldstärke fest, was bedeutet, daß sich der den betreffenden Kanal benutzende Mobilteilnehmer auf den Meßempfänger bzw. Funkkonzentrator zubewegt, so wird auch der Gradient des Anstiegs ermittelt. Besitzt die Feldstärke in einem Kanal eine steigende Tendenz, so wird die Verbindung identifiziert. Bei der Identifizierung wird jeweils die im Rahmen der Gesprächsüberwachung gesendete Funkbereichs- und Teilnehmernummer gelesen. Sobald die Feldstärke in einem der zu beobachtenden Kanäle einen vorgegebenen Grenzwert überschreitet, meldet der Meßempfänger diesen Sachverhalt sowie die anderen verbindungsspezifischen Daten zum Zweck der Umschaltung an eine zentrale Auswertung, und in der Überleiteinrichtung ÜLE wird eine Umschaltung der Verbindung eingeleitet. Sinkt in einem Teilnehmergerät die Verbindungsqualität unter einen bestimmten Grenzwert, so wird eine Umschaltung der Verbindung über Funkkonzentrator FUKO und Überleiteinrichtung ÜLE eingeleitet. Die Überleiteinrichtung fordert in den benachbarten Funkbereichen die Kanaldaten, und die Meßempfänger der benachbarten Funkkonzentratoren FUKO melden ihre Kanaldaten an die Überleiteinrichtung, die über die Umschaltung entscheidet und sie vollzieht.

Andererseits ist der Meßempfänger durch das Synchronsystem in der Lage, die Zeitdifferenz zwischen einem eigenen Sollzeitzeichen und dem Zeitzeichen der empfangenen Kanalinformation und damit die Entfernung des jeweiligen Teilnehmers zu messen. Mit dieser Entfernungsmessung ist eine weitaus verbindlichere Zuordnung der Teilnehmer zu den einzelnen Funkbereichen möglich als dies allein aufgrund der Feldstärke der Fall ist.

Durch die erfindungsgemäßen Maßnahmen, die eine Identifizierung einer während eines Gesprächs in einen anderen Funkbereich umzuschaltenden Verbindung und eine Trendfeststellung der mittleren Feldstärkeveränderung einer identifizierten Verbindung beinhalten, wird vermieden, daß Teilnehmer, die in benachbarten Funkbereichen an funkgeographisch besonders günstigen Geländepunkten operieren und deshalb in ihren Umgebungsbereichen eine hohe Feldstärke verursachen, bereits umgeschaltet werden. Es werden also Irrtümer bei der Übernahme der momentan möglichen durch Mehrwegeausbreitung (Rayleigh-Fading im Fahrbetrieb) verursachten Vieldeutigkeiten ausgeschlossen. Durch die Entfernungsmessung und die Feststellung des Veränderungsgradienten der Feldstärke wird eine eindeutige Möglichkeit zur Vermeidung der Desorganisation der Frequenzplanung geschaffen.

**Patentanspruch**

Mobiles Funknetz mit einer Anzahl Funkkonzentratoren in gegenseitiger räumlicher Anordnung nach Art eines Zellularsystems mit sich überlappenden Funkbereichen, bei dem jeweils eine fest vorgegebene Anzahl von einander unmittelbar benachbarten Funkbereichen eine Funkbereichsgruppe bildet, in denen sich die insgesamt zur Verfügung stehenden Frequenzkanäle wiederholen, bei dem ferner der Frequenzverteilungsplan für die Funkkonzentratoren so festgelegt ist, daß Gleichkanalstörungen im jeweiligen Funkbereich einschließlich einer erweiterten Randzone weitgehend ausgeschlossen sind, und bei dem wenigstens die Signalisierung in digitaler Form zwischen den ortsfesten Funkkonzentratoren und den beweglichen Teilnehmerstationen über für Duplexbetrieb ausgelegte Organisationskanäle vorgenommen ist und in jedem der mit einer zentralen Steuereinheit für die Funkdatensteuerung (FDS) versehenen Funkkonzentratoren (FUKO) ein Meßempfänger (ME) mit einer in das Synchronsystem der Funkkonzentratoren (FUKO) einbezogenen Steuerung vorgesehen ist, über die mittels Feldstärkemessung und Abspeichern der Feldstärkewerte eine Überwachung der Funkkanäle benachbarter Funkbereiche und Umschaltung beweglicher Teilnehmer in einen anderen Funkbereich erfolgt, dadurch gekennzeichnet, daß zusätzlich zur Messung der Feldstärke, für die im Meßempfänger (ME) über eine Vielzahl von Messungen der Trend ermittelt und daraus über eine zentrale Auswertung eine gegebenenfalls erforderliche Umschaltung eingeleitet wird, eine Messung der Entfernung der jeweiligen beweglichen Teilnehmerstation über die Zeitdifferenz zwischen einem eigenen Sollzeitzeichen und dem Zeitzeichen der empfangenen Kanalinformation der betreffenden Teilnehmerstation erfolgt.

**Claim**

A mobile radio network having a number of radio concentrators mutually spaced in accordance with a cellular system with overlapping radio regions, wherein a firmly determined number of mutually adjacent radio regions respectively forms a radio region group, in which the frequency channels available in all repeat themselves, wherein furthermore the frequency distribution plan for the radio concentrators is so determined that common channel interference in the respective radio region inclusive of an extended edge zone is largely eliminated, and wherein at least the signalling is effected in digital form between the stationary radio concentrators and the mobile subscriber stations by means of organisation channels which are designed for duplex operation and in each of the radio concentrators (FUKO) provided with a central control unit for the radio data control (FDS) there is arranged a measuring receiver (ME) having a control unit incorporated in the synchronous system of the radio concentrators (FUKO) and by means of which monitoring of the radio channels of adjacent radio regions and change-over of mobile subscribers into another radio region is effected via field strength measurement and storing of the field strength values, characterised in that in addition to the measurement of the field strength, for which the tendency for a possibly required change-over is determined in the measuring receiver (ME) by means of a plurality of measurements and is initiated therefrom by means of a central analysis, there is a measurement of the distance of the respective mobile subscriber station carried out by means of the time difference between a separate theoretical time character and the time character of the receiving channel information of the respective subscriber station.

## Revendication

Réseau radio mobile comportant un nombre de concentrateurs hertziens situés dans une disposition spatiale réciproque à la manière d'un système cellulaire comportant des régions de radiocommunications en recouvrement, dans lequel un nombre prédéterminé de façon fixe de régions de radiocommunications, dans lesquelles les canaux de fréquence globalement disponibles se répètent, forme un groupe de régions de radiocommunications, et dans lequel en outre le plan de répartition des fréquences pour les concentrateurs hertziens est fixé de telle sorte que les interférences par canal commun dans la région respective de radiocommunications ainsi que dans une zone marginale étendue sont exclues dans une large mesure, et dans lequel au moins la signalisation sous forme numérique entre les concentrateurs hertziens fixes et les postes d'abonnés mobiles est réalisée par l'intermédiaire de canaux d'organisation agencés pour un fonctionnement en duplex et dans lequel dans chacun des concentrateurs hertziens (FUKO) équipés d'une unité centrale de commande pour la commande des données de radiocommunications (FDS), il est prévu un récepteur de mesure (ME) comportant un dispositif de commande inséré dans le système de synchronisation des concentrateurs hertziens (FUKO) et au moyen duquel un contrôle des concentrateurs hertziens de régions de radiocommunications voisines et une commutation d'abonnés mobiles dans une autre région de radiocommunications sont réalisés grâce à une mesure de l'intensité de champ et une mémorisation des valeurs de l'intensité de champ, caractérisé par le fait qu'en plus de la mesure de l'intensité de champ pour laquelle la tendance est déterminée dans le récepteur de mesure (ME) par l'intermédiaire d'un grand nombre de mesures et, à partir de là, une commutation éventuellement nécessaire est déclenchée par l'intermédiaire d'une exploitation centrale, une mesure de la distance du poste d'abonné mobile considéré est réalisée par l'intermédiaire de l'écart dans le temps entre un signal temporel de consigne particulier et le signal temporel de l'information reçue du canal du poste d'abonné considéré.

## FIG 1

## FIG 2